# EUROPEAN PATENT SPECIFICATION

(11) **EP 4 074 899 B1**
(45) Date of publication and mention of the grant of the patent: **07.06.2023**
(21) Application number: 22160032.3
(22) Date of filing: 03.03.2022
(51) Int. Cl.: E02F 9/16, E02F 9/20, E02F 9/26, G05D 1/00, H04N 7/18

(54) **REMOTE OPERATION APPARATUS**
FERNBEDIENUNGSGERÄT
APPAREIL DE FONCTIONNEMENT À DISTANCE

(30) Priority: 30.03.2021 JP 2021058148
(43) Date of publication of application: 19.10.2022
(73) Proprietor: KOBELCO CONSTRUCTION MACHINERY CO., LTD., Hiroshima-shi Hiroshima 731-5161 (JP)
(72) Inventor: SASAKI, Hitoshi, Tokyo (JP); SAWADA, Yusuke, Hiroshima (JP)
(74) Representative: Schön, Christoph

(56) References cited:
- CN-A- 106 444 734
- US-A1- 2017 308 074
- US-A1- 2017 328 030
- US-B2- 9 982 415

## Description

### BACKGROUND OF THE INVENTION

### Field of the Invention

The present invention relates to an improved operation apparatus for a remote operation of a work machine.

### Description of the Related Art

In recent years, as disclosed in Japanese Patent Laid-Open No. 2020-200660, a system has been developed to perform a work by remotely operating a work machine in a work site. In a remote operation system of Japanese Patent Laid-Open No. 2020-200660, an operator boards a remote operation apparatus prepared in the same manner as in a maneuvering seat of an actual machine, to perform the remote operation. A maneuvering device comprises a monitor in front of the operator. The operator can see the same field of view as when the operator is in an actual vehicle, and can therefore maneuver the work machine as if the operator were in the actual vehicle.

The remote operation apparatus comprises a monitor, a seat apparatus equipped with operation devices including a lever, and a housing on which the seat apparatus is mounted and fixed. The housing functions as a step for use when the operator gets on and off the seat apparatus, and is made sturdy so that the housing is not deformed when the operator stands on the housing, and boards the seat apparatus. Also, an internal space of the housing is used to house electronic devices including a control PC which controls the maneuvering device.

However, a housing having the above configuration is very heavy, and hard to move. Therefore, the housing needs to be moved by a plurality of persons, and has poor transportability. To solve this problem, it is considered that the transportability is improved simply by dividing the conventional housing into two small housings. However, such a structure has concerns about stability when assembled and installed, and there is difficulty in acquiring the structure. Also, an operator sits on a seat fixed on the housing, and hence a gravity center height increases. If the housing is reduced in size in this state, a floor contact area is small for the high gravity center height, and this might lead to instability of a maneuvering device, such as falling of the maneuvering device.

An object of the present invention, which has been made to solve such problems, is to provide a remote operation apparatus which has an improved transportability and is excellent in stability and convenience.

### SUMMARY OF THE INVENTION

A remote operation apparatus according to the present invention is a remote operation apparatus which is operated by an operator to remotely operate a work executing machine, the remote operation apparatus comprising a seat including a seat part on which the operator sits, a seat holding device holding the seat, a drive device configured to move the seat, and a plurality of housings housing electronic equipment units including an arithmetic processing unit which performs entire processing of the remote operation apparatus, the plurality of housings include a first housing having an upper part to which the seat holding device is fixed, and a second housing in contact with and fixed to a part of the first housing in a front direction of the operator, and the drive device and the arithmetic processing unit are provided in the first housing.

### BRIEF DESCRIPTION OF THE DRAWINGS

FIG. 1 is a left rear perspective view of a remote operation apparatus according to an embodiment of the present invention;
FIG. 2 is a right rear perspective view of the remote operation apparatus of FIG. 1;
FIG. 3 is a left rear perspective view showing the remote operation apparatus of FIG. 1 from which a seat and a monitor device are removed;
FIG. 4 is a left side view of the remote operation apparatus of FIG. 3;
FIG. 5 is a front perspective view showing a connection portion between a second housing from which a second upper plate is removed and a first housing;
FIG. 6 is a plan view showing the first housing and the second housing from which a first upper plate and the second upper plate are removed, respectively; and
FIG. 7 is a front perspective view of the remote operation apparatus of FIG. 1.

### DETAILED DESCRIPTION OF THE PREFERRED EMBODIMENT

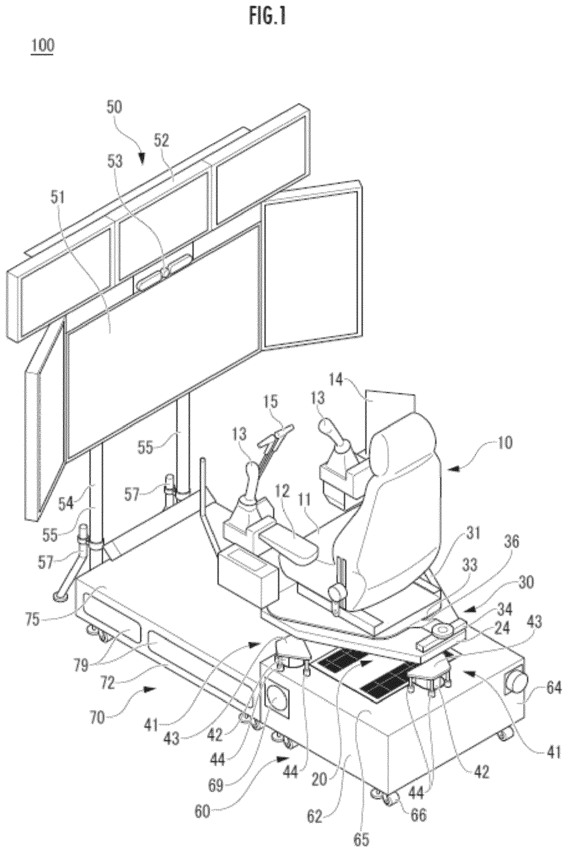

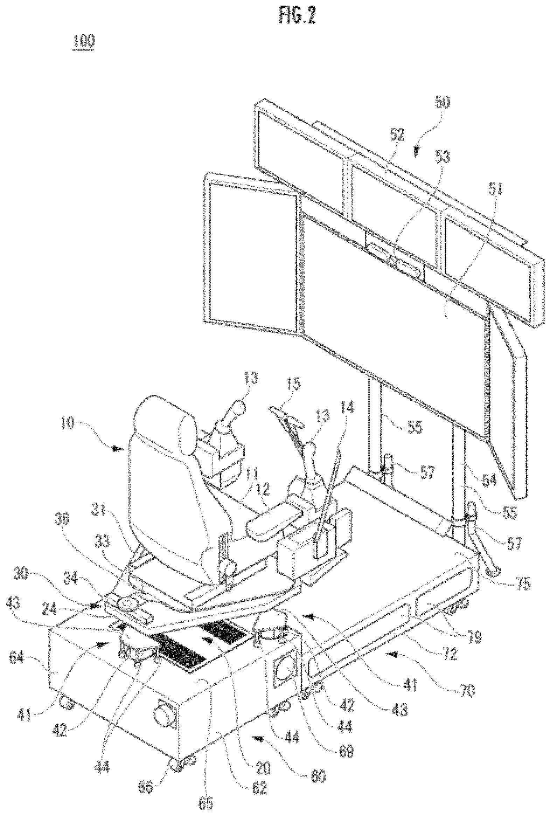

A remote operation apparatus 100 according to the present invention will be described with reference to FIGS. 1 and 2. The remote operation apparatus 100 is an apparatus configured to remotely operate an unshown work machine which is in a place remote from the remote operation apparatus 100. There are not any restrictions on a type of work machine, which is, for example, a crawler excavator of construction machinery.

The crawler excavator comprises a crawler type of lower running body, and an upper pivot body mounted on the lower running body via a pivot mechanism. The upper pivot body comprises a cab, and a work attachment including an arm with a bucket. The cab comprises a control mechanism which can remotely operate an operation lever and the like, and an imaging device which captures an image of a surrounding environment through a front window of the cab. The image captured by the imaging device is wirelessly transmitted to the remote operation apparatus 100, so that an operator can visually recognize the image. When the operator operates the remote operation apparatus 100 while seeing the transmitted image, a control signal is transmitted from the remote operation apparatus 100, and the work machine is remotely operated. In the work machine, an acceleration sensor is mounted such as a gyro sensor which detects an acceleration in three-axis direction, and a detected acceleration signal is wirelessly transmitted to the remote operation apparatus 100.

The remote operation apparatus 100 comprises a seat 10, a seat holding device 20, a drive device 30, a monitor device 50, a first housing 60, and a second housing 70. The seat 10 comprises a seat part 11, and arm rests 12 and 12 respectively provided on left and right sides of the seat 10. The left arm rest 12 includes an operation lever 13, and the right arm rest 12 includes an operation lever 13 and a display panel 14. The display panel 14 displays information indicating current states of the remotely operated work machine, the attachment and switches. The display panel 14 is, for example, a liquid crystal panel.

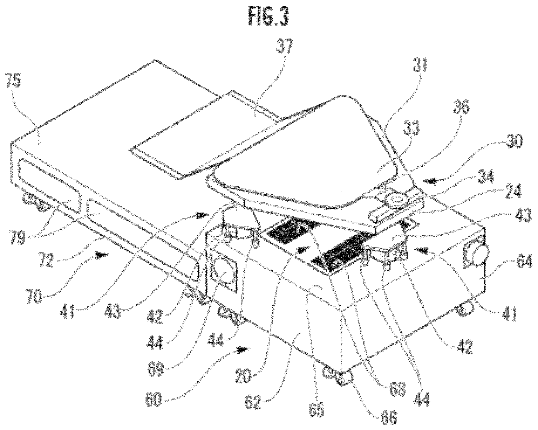

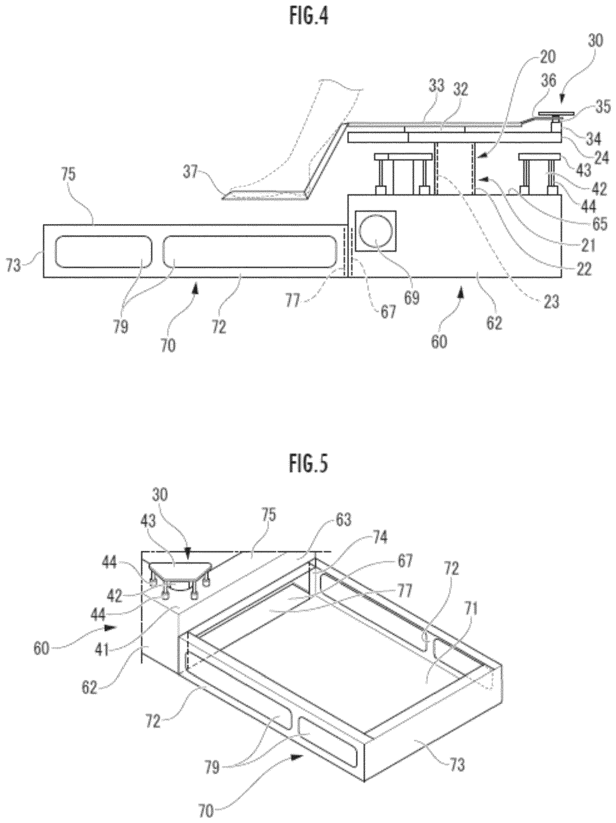

The seat holding device 20 will be described with reference to FIGS. 3 and 4. The seat holding device 20 holds the seat 10 on the first housing 60 in such a manner that the seat is movable in an up-down direction. The seat holding device 20 includes a holding shaft 21 and a horizontal plate 24. The horizontal plate 24 is a flat plate member, and is supported by the holding shaft 21 in a middle of a lower surface of the horizontal plate 24. The horizontal plate 24 is formed in a substantially triangular shape with one front side parallel in a left-right direction, and with a rear vertex cut with a line parallel to the one front side.

The holding shaft 21 includes a double tube structure where two hollow tubes having slightly different diameters are combined as an outer cylinder 22 and an inner cylinder 23. The outer cylinder 22 has an upper end fixed to the lower surface of the horizontal plate 24, and the inner cylinder 23 has a lower end fixed to an upper surface of the first housing 60. The outer cylinder 22 and the inner cylinder 23 are not fixed to each other, and are relatively movable in the up-down direction. The inner cylinder 23 inserted into the outer cylinder 22 has an open upper end, and an internal space surrounded with the outer cylinder 22 and the inner cylinder 23 is airtightly filled with high pressure gas. The seat 10 and the operator have a mass supported with a repulsive force of the high pressure gas. Therefore, the seat 10 can be moved in the up-down direction in a strokable range by the drive device 30.

Next, the drive device 30 will be described. The drive device 30 is a device which rotates the seat 10 and vibrates the seat 10, and which allows the operator to experience feeling of an operation on an actual machine. The drive device 30 includes a rotating device 31 and a vibrating device 41.

The rotating device 31 includes a rotary shaft 32 disposed on an upper surface of the horizontal plate 24, a rotating plate 33 mounted on the rotary shaft 32, a driving force device 34 which generates a driving force to rotate the rotating plate 33, and a coupling member 36 which transmits, to the rotating plate 33, the driving force generated by the driving force device 34.

The seat 10 is rotatably mounted on the rotating plate 33, and the rotating plate is rotated together with the seat 10 by the driving force transmitted from the driving force device 34. The driving force device 34 generates the driving force in response to the acceleration signal. Also, in a front part of the rotating plate 33, a foot holding part 37 is disposed on which the operator puts feet when sitting on the seat 10. Further, a running lever 15 is fixed to the foot holding part 37. The driving force device 34 is a linear drive device formed in a rectangular parallelepiped shape, and disposed on a rear end of the horizontal plate 24. There are not any restrictions on a drive form of the linear drive device, and the drive form may be any form such as an air cylinder, a combination of a rotary motor and ball screw, or a linear motor. The coupling member 36 couples the driving force device 34 to a rear end of the rotating plate 33.

In an end of the coupling member 36 on a driving force device 34 side, an unshown long hole is formed through which a drive shaft 35 of the driving force device 34 extends. The drive shaft 35 of the driving force device 34 linearly moves, and the coupling member 36 fixed to the rear end of the rotating plate 33 moves in an arc depending on the rotation of the rotating plate 33. Therefore, a position of the coupling member 36 is relatively moved away from a linear moving position of the driving force device 34, as a rotation angle of the rotating plate 33 increases in a front-rear direction of the remote operation apparatus 100. Therefore, when the coupling member 36 relatively moves to the drive shaft 35, the drive shaft 35 is configured to transmit the driving force of the driving force device 34, while relatively moving in the long hole. Specifically, the coupling member 36 coupled to the rear end of the rotating plate 33 transmits the driving force from the driving force device 34 to the rotating plate 33, while change in positional relation between the coupling member 36 and the driving force device 34 depending on a rotation angle position of the rotating plate 33 is absorbed in the long hole of the coupling member 36.

The vibrating device 41 includes a plurality of cylinders 42. The vibrating device 41 further includes a pressing plate 43 provided on an upper part of each of the cylinders 42, and a plurality of stopper members 44 each fixed to a lower surface of the pressing plate 43. Three cylinders 42 are provided in the first housing 60. Specifically, two cylinders are arranged on a front side and one cylinder is disposed on a rear side in accordance with the horizontal plate 24 formed in the substantially triangular shape. The upper part of the cylinder 42 is fixed substantially to a center of the pressing plate 43. The pressing plate 43 moves the cylinder 42 in the up-down direction, and presses the lower surface of the horizontal plate 24 to vibrate the seat 10, in response to the acceleration signal from the remotely operated work machine. A drive source of the cylinder 42 is, for example, an air pressure or an electric motor.

As shown in FIGS. 3 and 4, as for a position of each pressing plate 43 in the up-down direction when the vibrating device 41 is not actuated, the pressing plate 43 is located at a lower end of a stroke range in the up-down direction. When each cylinder 42 is not actuated, the lower surface of each pressing plate 43 is held by four stopper members 44 which are arranged to surround a periphery of the cylinder 42 under the pressing plate 43.

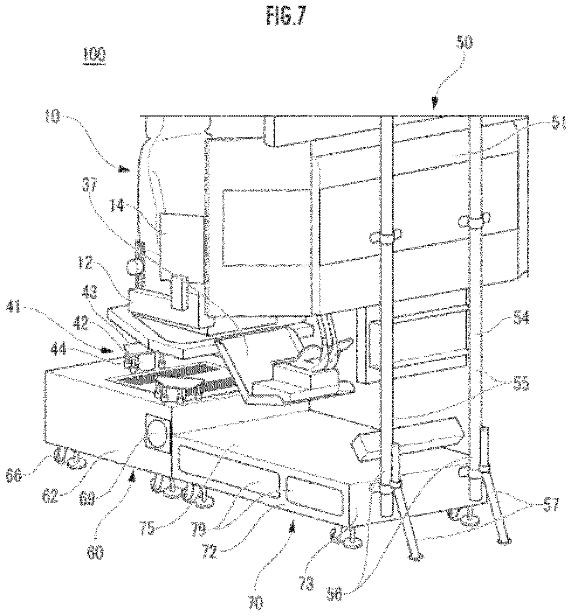

The monitor device 50 will be described with reference to FIGS. 1, 2 and 7. The monitor device 50 includes a first screen part 51, a second screen part 52, a camera 53, and a monitor support part 54. Each of the first screen part 51 and the second screen part 52 includes three displays which are arranged continuously in the left-right direction. Each of the first screen part 51 and the second screen part 52 displays left, front and right images of the imaged work machine, and the operator performs the remote operation while visually recognizing the images in the monitor device 50. The monitor support part 54 includes two holding members 55 formed of hollow metal tubes and auxiliary members 57 respectively fixed to the holding members 55. The first screen part 51 and the second screen part 52 are fixed to upper portions of the holding members 55 with fixtures.

Also, each holding member 55 has one end 56 on a lower side which is securely fixed to a second front plate 73 of the second housing 70, and the holding member 55 is held to be perpendicular. Since the holding members 55 are fixed to the second front plate 73, it is not necessary to adjust and match a space between the seat 10 and the monitor device 50 every time the disassembled remote operation apparatus 100 is assembled again, and the space can be adjusted to a predetermined space by the assembling. Each auxiliary member 57 is fixed to the one end 56 of the holding member 55. Each auxiliary member 57 has a lower end in contact with a floor surface, and the auxiliary members 57 are configured to securely support the monitor device 50 that is a heavy object, together with the second housing 70. Note that there are not any restrictions on the fixtures with which the holding members 55, the monitor device 50 and the auxiliary members 57 are fixed, and each fixture may be, for example, a fastener comprising a metal bracket formed in a U-shape and a bolt and nut. By use of the fastener comprising the metal bracket and the bolt and nut, the remote operation apparatus 100 can be easily disassembled and assembled.

A plurality of housings 60 and 70 will be described with reference to FIGS. 3 to 5. The plurality of housings 60 and 70 are members having upper parts on which the seat 10 and the like are mounted, and housing electronic equipment units inside. To improve transportability of the remote operation apparatus 100, a housing comprises the plurality of housings 60 and 70, i.e., the first housing 60 and the second housing 70. The first housing 60 and the second housing 70 have the same length in the left-right direction, and have different lengths in the front-rear direction and the up-down direction. The second housing 70 is connected to a front of the first housing 60.

The first housing 60 is a rectangular parallelepiped body having an upper part on which the drive device 30, the seat holding device 20 and the seat 10 are mounted, and housing the electronic equipment units including a first arithmetic processing unit 81, a second arithmetic processing unit 82, and a seat controller 84. The first arithmetic processing unit 81 controls output of the monitor device 50, controls output of the display panel 14, recognizes input of the display panel, and recognizes inputs of the operation lever 13 and the running lever 15. The second arithmetic processing unit 82 manages communication between the remote operation apparatus 100 and the work machine that is a remote operation target, and passes a picture and an inclination signal, which are wirelessly transmitted from the work machine, to the first arithmetic processing unit 81. The second arithmetic processing unit also transmits, to the work machine, input information of input of an operation or the like recognized by the first arithmetic processing unit 81. The seat controller 84 controls the driving force device 34 and the vibrating device 41 based on the acceleration signal. At positions of six surfaces of the first housing 60 formed as the rectangular parallelepiped body, a first bottom plate 61, two first side plates 62 and 62, a first front plate 63, a first rear plate 64 and a first upper plate 65 are respectively arranged. The first bottom plate 61 formed in a rectangular shape has a lower surface under which casters 66 are arranged, each caster including an anti-movement tool around each corner of the first bottom plate 61.

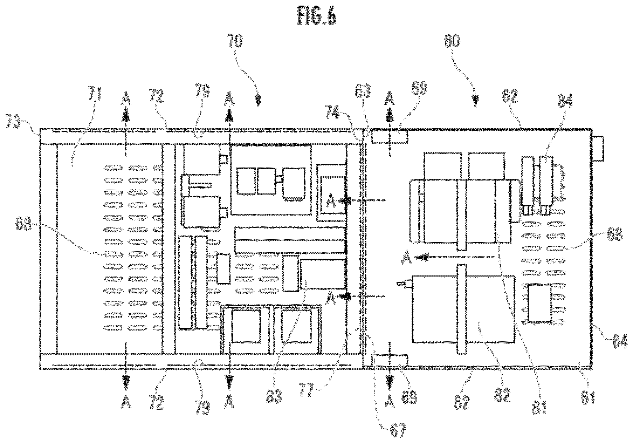

FIG. 6 shows electronic equipment units arranged in interiors of the first housing 60 and the second housing 70. In the first housing 60, the first arithmetic processing unit 81 and the second arithmetic processing unit 82 are arranged which are two comparatively heavy units. In the first housing 60, the first arithmetic processing unit 81 and the second arithmetic processing unit 82 are arranged to be balanced relative to a central position of the seat 10, in the left-right direction and the front-rear direction. The first arithmetic processing unit 81 and the second arithmetic processing unit 82 are arranged at substantially symmetrical positions to a central axis of the second housing in the left-right direction.

For example, the first arithmetic processing unit 81 is disposed at a distance K on one side with respect to the central axis in the left-right direction, and the second arithmetic processing unit 82 is disposed in a range of a distance from 0.8 K to 1.2 K (K ± about 0.2 K) on the other side opposite to the first arithmetic processing unit 81. Further, in the first housing 60, arrangement in the front-rear direction is similar to that in the left-right direction. For example, the first arithmetic processing unit 81 is disposed at a distance L on one side with respect to a central axis in the front-rear direction, and the second arithmetic processing unit 82 is disposed in a range of a distance from 0.8 L to 1.2 L (L ± about 0.2 L) on the other side opposite to the first arithmetic processing unit 81. Therefore, the first arithmetic processing unit 81 and the second arithmetic processing unit 82 are arranged at positions substantially close to a total gravity center position of a device such as the seat 10 disposed above the first housing 60 and the operator on the seat 10, in the left-right direction and front-rear direction, and the units are arranged to take a mass balance. Furthermore, the total gravity center position of the device such as the seat 10 and the operator on the seat 10 is a high position in the up-down direction of the second housing 70. On the other hand, the first arithmetic processing unit 81 and the second arithmetic processing unit 82 are arranged at low positions, which contributes to decrease in total gravity center height of the remote operation apparatus 100.

In the first upper plate 65 and the first bottom plate 61, a plurality of small cutouts 68 are provided. On the left and right first side plates 62 and 62, exhaust fans 69 and 69 are respectively provided. Therefore, air introduced from the cutouts 68 flows while cooling the arithmetic processing unit 81 housed in the first housing 60, and the air is exhausted from the exhaust fans 69 and 69 arranged on the left and right first side plates 62 and 62. As shown in FIG. 4, in the first front plate 63 of the first housing 60 which is a connection surface to the second housing 70, a first opening 67 is provided as an opening.

The second housing 70 houses a communication device 83 that is an electronic equipment unit in the interior of the second housing 70. At positions of six surfaces of the second housing 70 formed as a rectangular parallelepiped body, a second bottom plate 71, two second side plates 72 and 72, a second front plate 73, a second rear plate 74 and a second upper plate 75 are respectively arranged. The communication device 83 is a unit configured to communicate with the work machine that is the remote operation target, and is controlled by the second arithmetic processing unit 82. The communication device 83 comprises a transmitter/receiver, and a switching hub which connects the transmitter/receiver to another control equipment such as the first arithmetic processing unit 81 or the second arithmetic processing unit 82. The communication device 83 is connected to the other control equipment, for example, via a LAN cable. The second bottom plate 71 formed in a rectangular shape has a lower surface under which casters 66 are arranged, each caster including an anti-movement tool around each corner of the second bottom plate 71. Also, in the second bottom plate 71, a plurality of small cutouts 68 are provided. Note that in the second upper plate 75, any cutouts 68 are not provided. This prevents foreign matter from intruding into the second housing 70, because the second upper plate 75 is close to the foot holding part 37, and the second upper plate 75 is easy to get dust from above the second upper plate.

When updating software of the remote operation apparatus 100, for example, it is necessary to connect a commercial PC to the remote operation apparatus 100, and rewrite the software mounted in the first arithmetic processing unit 81 or the second arithmetic processing unit 82. In this case, the software of the remote operation apparatus 100 can be updated by connecting the commercial PC to the switching hub of the communication device 83.

Also, in a case where malfunction occurs in the remote operation apparatus 100 or at a time of regular inspection, the communication device 83 that is a relay point of a communication signal is first examined, to confirm whether or not the signal reaches the communication device 83. In a case where failure occurs in the communication device 83, a replacing work of the communication device 83 or a peripheral component such as a cable connected to the communication device 83 is performed.

Any components are not arranged above the second housing 70, and the second upper plate 75 is easily removable, which makes it easy to confirm the housed communication device 83. Therefore, an update work of the software and a maintenance work of the communication device 83 can be efficiently performed.

The second housing 70 is a rectangular parallelepiped body similar to the first housing 60, but is formed to be longer than the first housing in the front-rear direction and to be lower than the first housing in the up-down direction. The second housing 70 has a height smaller than a height of the first housing 60 for the following reasons. A first reason is that in a case where the operator boards the remote operation apparatus 100, when the seat 10 has a higher seat surface, it is harder to get on and off the seat, and that it is easy to board by use of the second housing 70, which is lower than the first housing 60, as a boarding step.

A second reason is that the remote operation apparatus 100 is configured to be hard to fall and to have high stability. As shown in FIG. 4, the foot holding part 37 on which the operator puts feet is located above the second housing 70. It is necessary to prevent the second housing 70 from interfering with the foot holding part 37, and hence a height position of the foot holding part 37 can be lowered by suppressing a height of the second upper plate 75 of the second housing 70 down to a predetermined height. As a result, the seat 10 can be disposed at a low position, and a height of the whole remote operation apparatus 100 can be lowered. Therefore, the remote operation apparatus 100 is hard to fall, and improves the stability. In particular, the seat 10 rotates and vibrates during actuation of the remote operation apparatus 100, and hence the operator preferably feels more stability from a lower position than from a higher position of the seat 10 when sitting on the seat 10. The remote operation apparatus 100 improves the stability of the remote operation apparatus 100, and makes it easier for the operator to get on and off the remote operation apparatus 100, because the second upper plate 75 of the second housing 70 is disposed to be lower than the first upper plate 65 of the first housing 60.

In each of the left and right second side plates 72 and 72, one or more side plate openings 79 for weight reduction are provided. Further, in the second rear plate 74 of the second housing 70 which is a connection surface to the first housing 60, as shown in FIG. 4, a second opening 77 is provided as an opening. FIG. 5 shows a front perspective view of the connection surfaces of the first housing 60 and the second housing 70 from which the second upper plate 75 is removed. The first opening 67 of the first housing 60 and the second opening 77 of the second housing 70 are formed to about the same size, and both the openings form one communicating opening.

The first front plate 63 and the second rear plate 74 are fixed to four corners of the second rear plate 74 in plate parts in contact with each other, with fasteners such as unshown bolts and nuts. During transport, the first housing 60 and the second housing 70 can be easily separated only by removing the fasteners. Alternatively, to facilitate the work, a stud bolt may be provided in one plate, a bolt hole may be provided in the other plate, the stud bolt is inserted into the bolt hole, and then the plates can be fixed with a thumbscrew. In this case, both the housings can be coupled and separated without any tools. Note that as shown in FIG. 5, the first opening 67 is not formed in a part of the first front plate 63 above the second upper plate 75. This prevents foreign matter from intruding from the first front plate 63 into the first housing 60, the first front plate being located right under the foot holding part 37.

According to a communication structure of the first opening 67 with the second opening 77, part of air introduced through the cutouts 68 in the upper part of the first housing 60 flows through an opening formed of the first opening 67 and the second opening 77 into the second housing 70, and is exhausted from one or more side plate openings 79 provided in each of the left and right second side plates 72 and 72. This can improve coolability for the electronic equipment units by a simple technique without providing any additional cooling devices. Also, dust or the like that intrudes into the first housing 60 and second housing 70 are conveyed via flow of cooling air and discharged from the side plate openings 79. Alternatively, the side plate openings 79 may be closed with a lightweight plate member such as an acrylic plate to prevent the foreign matter from intruding from the side plate openings 79.

In FIG. 6, arrows A conceptually indicate the flow of part of air flowing through the interiors of the first housing 60 and second housing 70. Since the first opening 67 and the second opening 77 are provided, air can flow through the interiors of the first housing 60 and second housing 70 while efficiently cooling the interiors.

Since the housing included in the remote operation apparatus 100 of the present invention is divided into two housings, transportability improves. With the improvement in transportability, in the remote operation apparatus 100 in which the sitting operator has a high gravity center height and a weight tends to be unbalanced, the drive device 30 and the first and second arithmetic processing units 81 and 82, which are heavy objects, are arranged in the first housing 60 holding the seat 10 above. This can contribute to decrease in the gravity center height, and can provide the remote operation apparatus 100 with good weight balance. Also, the first housing holding the seat 10 has a weight larger than that of the second housing 70, and the position of the center of gravity of the whole remote operation apparatus 100 can be located in the first housing 60. During assembling and installing of the remote operation apparatus 100, the comparatively heavy first housing 60 comprising the drive device 30 and the first arithmetic processing unit 81 is installed, and then the second housing 70, the seat 10 and others are installed. Since the position of the center of gravity of the whole remote operation apparatus 100 is located in the first housing 60, the weight balance can retain stability without being unbalanced.

Also, it is preferable that the remote operation apparatus according to the present invention comprises a foot holding part configured to hold feet of the operator put on the foot holding part, the first housing includes a first upper plate that covers the upper part of the first housing, the second housing includes a second upper plate that covers an upper part of the second housing, the second upper plate is disposed at a position lower than a position of the first upper plate, and the foot holding part is located above the second upper plate and at a height equal to or less than a height of the seat part.

According to the present invention, in upper surfaces of two housings, the upper surface of the first housing to which a seat is fixed is made higher to keep a seat surface of an operator's chair at a high position, and the upper surface of the second housing on a foot side is made lower, so that a sufficient space for the operator's feet can be acquired and it is easy to get on and off the upper surface of the second housing from and to a floor surface on which a maneuvering device is installed. That is, the maneuvering device that is easy to get on and off and easy to maneuver can be obtained. Further, since the upper surface of the second housing is made lower, the foot holding part can be prevented from interfering with the second housing also in a case where the seat is noticeably inclined by a drive device.

Further, in the remote operation apparatus according to the present invention, it is preferable that the first housing and the second housing respectively include openings in connection surfaces in contact with each other and the openings communicate with each other.

In the present invention, according to a structure where the respective openings in the first housing and the second housing communicate with each other to allow cooling air to flow through the housings, coolability for electronic equipment units arranged in the first housing and the second housing can be improved without adding any devices, as compared with an original case where there are not any openings in connection surfaces in contact with each other.

Also, in the remote operation apparatus according to the present invention, it is preferable that the second housing houses a communication device through which the arithmetic processing unit communicates with a device other than the arithmetic processing unit.

According to the present invention, the communication device with frequent maintenance is disposed in a centralized manner in one housing, so that maintainability can improve. The communication device is not disposed in the first housing to which the seat is fixed but is disposed in the second housing, and is therefore easy to maintain without being obstructed by the seat as compared with a case where the communication device is disposed in the first housing on which the seat is mounted.

Also, it is preferable that the remote operation apparatus according to the present invention comprises a monitor device which is disposed in front of the operator, and displays a front field of view of the machine received from the remotely operated machine, the monitor device includes a plurality of screen parts, and a plurality of holding members holding the plurality of screen parts, and each of the plurality of holding members has one end fixed to the second housing.

According to the present invention, a large monitor device is disposed in the centralized manner in the housing with a minimum holding mechanism, and can be therefore securely fixed. Furthermore, a distance between the housing and the monitor device can be kept constant, and a distance adjustment work is not required.

### Reference Signs List

- 10: seat
- 11: seat part
- 20: seat holding device
- 30: drive device
- 37: foot holding part
- 50: monitor device
- 51: first screen part
- 52: second screen part
- 55: holding member
- 56: one end
- 65: first upper plate
- 75: second upper plate
- 60: first housing
- 70: second housing
- 81: first arithmetic processing unit
- 82: second arithmetic processing unit
- 83: communication device
- 100: remote operation apparatus

## Claims

1. A remote operation apparatus (100) which is operated by an operator to remotely operate a work executing machine, the remote operation apparatus comprising:
a seat (10) including a seat part on which the operator sits;
a seat holding device (20) holding the seat;
a drive device (30) configured to move the seat; and
a plurality of housings (60,70) housing electronic equipment units including an arithmetic processing unit (82) which performs entire processing of the remote operation apparatus,
wherein
the plurality of housings include a first housing (60) having an upper part to which the seat holding device is fixed, and a second housing (70) in contact with and fixed to a part of the first housing in a front direction of the operator, and
the drive device and the arithmetic processing unit are provided in the first housing.

2. The remote operation apparatus according to claim 1, further comprising
a foot holding part (37) configured to hold feet of the operator put on the foot holding part, wherein
the first housing (60) includes a first upper plate (65) that covers the upper part of the first housing,
the second housing (70) includes a second upper plate (75) that covers an upper part of the second housing,
the second upper plate is disposed at a position lower than a position of the first upper plate, and
the foot holding part is located above the second upper plate and at a height equal to or less than a height of the seat part.

3. The remote operation apparatus according to claim 1 or 2, wherein
the first housing (60) and the second housing (70) respectively include openings (67,77) in connection surfaces in contact with each other, and
the openings communicate with each other.

4. The remote operation apparatus according to anyone of claims 1 to 3, wherein the second housing (70) houses a communication device (83) through which the arithmetic processing unit communicates with a device other than the arithmetic processing unit.

5. The remote operation apparatus according to anyone of claims 1 to 4, further comprising
a monitor device (50) which is disposed in front of the operator, and displays a front field of view of the machine received from the remotely operated machine, wherein the monitor device includes a plurality of screen parts (51,52) and a plurality of holding members (55) holding the plurality of screen parts, and
each of the plurality of holding members has one end fixed to the second housing (70).

## Patentansprüche

1. Fernbetätigungsvorrichtung (100), die von einem Bediener bedient wird, um eine Arbeit ausführende Maschine fernzubetätigen, wobei die Fernbetätigungsvorrichtung Folgendes umfasst:
einen Sitz (10) mit einem Sitzteil, auf dem der Bediener sitzt,
eine Sitzhaltevorrichtung (20), die den Sitz hält,
eine Antriebsvorrichtung (30), die dazu konfiguriert ist, den Sitz zu bewegen, und
mehrere Gehäuse (60, 70), die elektronische Ausrüstungseinheiten, einschließlich einer arithmetischen Verarbeitungseinheit (82), die die gesamte Verarbeitung der Fernbetätigungsvorrichtung durchführt, beherbergen,
wobei
die mehreren Gehäuse ein erstes Gehäuse (60), das ein oberes Teil, an dem die Sitzhaltevorrichtung befestigt ist, aufweist, und ein zweites Gehäuse (70), das sich in Frontrichtung des Bedieners in Kontakt mit einem Teil des ersten Gehäuses befindet und daran befestigt ist, umfassen, und
die Antriebsvorrichtung und die arithmetische Verarbeitungseinheit in dem ersten Gehäuse vorgesehen sind.

2. Fernbetätigungsvorrichtung gemäß Anspruch 1, des Weiteren umfassend:
ein Fußhalteteil (37), das zum Halten der auf dem Fußhalteteil platzierten Füße des Bedieners konfiguriert ist, wobei
das erste Gehäuse (60) eine erste obere Platte (65), die den oberen Teil des ersten Gehäuses abdeckt, umfasst,
das zweite Gehäuse (70) eine zweite obere Platte (75), die einen oberen Teil des zweiten Gehäuses abdeckt, umfasst,
die zweite obere Platte an einer Position angeordnet ist, die niedriger als eine Position der ersten oberen Platte ist, und
das Fußhalteteil sich über der zweiten oberen Platte und auf einer Höhe, die gleich oder niedriger als eine Höhe des Sitzteils ist, befindet.

3. Fernbetätigungsvorrichtung gemäß Anspruch 1 oder Anspruch 2, wobei
das erste Gehäuse (60) und das zweite Gehäuse (70) jeweils Öffnungen (67, 77) in den miteinander in Kontakt stehenden Verbindungsflächen umfassen und
die Öffnungen miteinander in Verbindung stehen.

4. Fernbetätigungsvorrichtung gemäß einem der Ansprüche 1 bis 3, wobei das zweite Gehäuse (70) eine Kommunikationsvorrichtung (83) beherbergt, durch die die arithmetische Verarbeitungseinheit mit einer von der arithmetischen Verarbeitungseinheit verschiedenen Vorrichtung kommuniziert.

5. Fernbetätigungsvorrichtung gemäß einem der Ansprüche 1 bis 4, des Weiteren umfassend:
eine Monitorvorrichtung (50), die vor dem Bediener angeordnet ist und ein vorderes Sichtfeld der Maschine, das von der fernbetätigten Maschine empfangen wird, anzeigt,
wobei
die Monitorvorrichtung mehrere Bildschirmteile (51, 52) und mehrere Halteelemente (55), die die mehreren Bildschirmteile halten, umfasst, und
jedes der mehreren Halteelemente ein an dem zweiten Gehäuse (70) befestigtes Ende aufweist.

## Revendications

1. Appareil de fonctionnement à distance (100) qui est actionné par un opérateur pour actionner à distance une machine exécutant un travail, l'appareil de fonctionnement à distance comprenant :
un siège (10) incluant un élément d'assise sur lequel l'opérateur est assis ;
un dispositif de retenue de siège (20) retenant le siège ;
un dispositif d'entraînement (30) configuré pour déplacer le siège ; et
une pluralité de boîtiers (60, 70) abritant des unités d'équipement électronique incluant une unité de traitement arithmétique (82) qui réalise le traitement complet de l'appareil de fonctionnement à distance,
la pluralité de boîtiers incluant un premier boîtier (60) comportant un élément supérieur auquel le dispositif de retenue de siège est fixé, et un second boîtier (70) en contact avec et fixé à une partie du premier boîtier en direction du front de l'opérateur ; et
le dispositif d'entraînement et l'unité de traitement arithmétique étant fourni dans le premier boîtier.

2. Appareil de fonctionnement à distance selon la revendication 1, comprenant en outre
un élément de retenue de pieds (37) configuré pour retenir les pieds de l'opérateur posés sur l'élément de retenue de pieds,
le premier boîtier (60) incluant une première plaque supérieure (65) qui couvre une partie supérieure du premier boîtier,
le second boîtier (70) incluant une seconde plaque supérieure (75) qui couvre une partie supérieure du second boîtier,
la seconde plaque supérieure étant disposée à une position plus basse qu'une position de la première plaque supérieure, et
l'élément de retenue de pieds se situant au-dessus de la seconde plaque supérieure et à une hauteur inférieure ou égale à une hauteur de l'élément d'assise.

3. Appareil de fonctionnement à distance selon la revendication 1 ou 2, dans lequel
le premier boîtier (60) et le second boîtier (70) incluent respectivement des ouvertures (67, 77) dans des surfaces de connexion en contact l'une avec l'autre, et
les ouvertures communiquent entre elles.

4. Appareil de fonctionnement à distance selon l'une quelconque des revendications 1 à 3, dans lequel le second boîtier (70) abrite un dispositif de communication (83) à travers lequel l'unité de traitement arithmétique communique avec un dispositif autre que l'unité de traitement arithmétique.

5. Appareil de fonctionnement à distance selon l'une quelconque des revendications 1 à 4, comprenant en outre
un dispositif de moniteur (50) qui est disposé devant l'opérateur, et affiche un champ de vision avant de la machine reçues en provenance de la machine actionnée à distance,
le dispositif de moniteur incluant une pluralité d'éléments écrans (51, 52) et une pluralité d'éléments de retenue (55) retenant la pluralité d'éléments écrans, et
chacun de la pluralité d'éléments de retenue ayant une extrémité fixée au second boîtier (70).
